# EUROPÄISCHE PATENTSCHRIFT

(11) **EP 2 440 366 B1**
(45) Veröffentlichungstag und Bekanntmachung des Hinweises auf die Patenterteilung: **11.01.2023**
(21) Anmeldenummer: 10732628.2
(22) Anmeldetag: 29.05.2010
(51) Int. Cl.: B23K 26/38, B23K 15/08, B23K 26/06, B23K 26/04

(54) **VERFAHREN UND VORRICHTUNG ZUM ERZEUGEN EINES LOCHS IN EINEM GEGENSTAND**
METHOD AND DEVICE FOR PRODUCING A HOLE IN AN OBJECT
PROCÉDÉ ET DISPOSITIF POUR FAIRE UN TROU DANS UN OBJET

(30) Priorität: 06.06.2009 DE 102009024117
(43) Veröffentlichungstag der Anmeldung: 18.04.2012
(73) Patentinhaber: MTU Aero Engines AG, 80995 München (DE)
(72) Erfinder: GEISEL, Mark, 86899 Landsberg am Lech (DE); SCHUR, Stefan, 80686 München (DE)
(86) Internationale Anmeldenummer: PCT/DE2010/000607
(87) Internationale Veröffentlichungsnummer: WO 2010/139304

(56) Entgegenhaltungen:
- WO-A1-2009/023279
- WO-A1-2009/053031
- DE-A1- 10 054 853
- US-A1- 2004 016 730

## Beschreibung

Die vorliegende Erfindung bezieht sich auf das technische Gebiet eines Erzeugens eines Lochs in einem Gegenstand und insbesondere auf das Erzeugen eines Lochs in einem Gegenstand mittels eines Strahls zum Abtragen von Material.

Das Bohren mittels eines materialabtragenden energetischen Strahls, wie beispielsweise ein Elektronen- oder Laserstrahlbohren hat sich in den vergangenen Jahrzehnten zu einem Standardwerkzeug für viele Bearbeitungen entwickelt, beispielsweise für die Bearbeitung von Turbinenschaufeln oder Brennkammerelementen. Derartige Bauteile können eine sehr hohe Anzahl von Bohrungen beispielsweise über 1000 aufweisen. Das Strahlbohren hat sich dabei als ein besonders wirtschaftliches Werkzeug bewiesen und wird insbesondere in diesen Anwendungsfällen aufgrund der überragenden Prozesseffizienz bevorzugt eingesetzt.

Dem Strahlbohren sind physikalische Grenzen gesetzt, wobei insbesondere das sogenannte Schachtverhältnis, dass heißt das Verhältnis aus Bohrungstiefe z zu Bohrungsdurchmesser d die Grenzen der Bohrungsgeometrie, die prozessstabil gefertigt werden können, bestimmt.

Verschiedene Verfahren zum Durchführen von derartigen Bohrungen sind im Stand der Technik bekannt. Beispielsweise ist aus der US7490664B2 bekannt, ein dynamisches Anpassen einer Laserfokuslänge bei einem Laserbohren durchzuführen. Ferner zeigt die WO2009089292 ein Anpassen einer Fokuslänge bei tieferen Bohrungen. Die US20040016730A1 zeigt das Durchführen einer Anpassung, um einen Laserstrahl auf einer Kontaktoberfläche eines Werkstücks zu fokussieren. Ferner zeigt die US20030006220A1 das kontinuierliche Erhöhen eines Fokus in eine z Richtung, um bei einem Abtragen von Schichten eines Substrats ein Beschädigen des Substrats zu vermeiden. Die DE 100 54 853 A1 beschreibt eine Vorrichtung zum Laserbohren, die eine Veränderung der Fokuslage sowie der Strahlkaustik ermöglicht. Die Druckschrift beschreibt ferner das Einstellen der Konizität einer Bohrung anhand dieser Parameter.

Es ist die Aufgabe der vorliegenden Erfindung ein Konzept zu schaffen, das es ermöglicht, ein verbessertes Durchführen eines Erzeugens eines Lochs mittels eines Strahlbohrens zu ermöglichen.

Diese Aufgabe wird durch ein Verfahren gemäß Anspruch 1, eine Vorrichtung gemäß Anspruch 7 und ein Computerprogramm gemäß Anspruch 13 gelöst.

Der vorliegenden Erfindung liegt die Erkenntnis zugrunde, dass eine Kombination aus einer Fokuslagennachführung, bei der ein Bohrungsgrund nach einem Abtragen von Material erneut in eine Fokuslage des Strahls gesetzt wird, und einer zusätzlichen Veränderung bzw. Modulation einer Strahlcharakteristik des Strahls bei dem erneuten Setzen des Bohrungsgrunds in eine Fokuslage ein qualitativ hochwertigeres Erzeugen eines Lochs ermöglicht. Insbesondere ist es dadurch möglich, auch bei einem sehr hohen Schachtverhältnis hochwertige und genaue Bohrungen mittels Laser- oder Elektronenstrahlbohrens durchzuführen. Ein Verfahren zum Erzeugen eines Lochs gemäß einem Ausführungsbeispiel umfasst dabei das Erzeugen eines Strahls zum Abtragen von Material derart, dass ein Bohrungsgrund in eine Fokuslage des Strahls gesetzt ist und ein Entfernen von Material durch das Auftreffen des Strahls am Bohrungsgrund. Zum Durchführen einer Fokuslagennachführung wird ein erneutes Setzen des Bohrungsgrunds in eine Fokuslage des Strahls zum Ausgleichen einer Zunahme der Tiefe des Lochs aufgrund des Entfernens von Material durchgeführt. Erfindungsgemäß wird bei dem erneuten Setzen des Bohrungsgrunds in eine Fokuslage eine Strahlcharakteristik des Strahls verändert. Das Verändern der Strahlcharakteristik kann dabei abhängig von einer momentanen Tiefe des Lochs erfolgen. Gemäß der Erfindung umfasst das Verändern der Strahlcharakteristik ein vorbestimmtes Verändern bzw. Modulieren einer Strahlkaustik des Strahls, derart dass bei dem Erneuten Setzen in eine Fokuslage ein Konkavitätsgrad der Strahlkaustik mit zunehmender Tiefe des Lochs abnimmt. Die Veränderung der Strahlkaustik umfasst bei einem Ausführungsbeispiel ein Verändern des Fokusdurchmessers, derart, dass mit zunehmender Tiefe der Fokusdurchmesser geringer wird. Das Modulieren der Strahlkaustik kann dabei durch das Verändern eines Blendendurchmessers erfolgen, wobei der Blendendurchmesser durch das Einbringen einer ausgewählten Blende eine Mehrzahl von Blenden in einen Strahlgang oder durch eine Veränderung des Blendendurchmessers einer veränderbaren Blende erfolgen kann.

Bei einem weiteren Ausführungsbeispiel kann die Veränderung der Strahlkaustik ein Verändern des Fokusdurchmessers umfassen, derart, dass mit zunehmender Tiefe der Fokusdurchmesser größer wird. Bei einem Ausführungsbeispiel wird hierbei der Strahl vor dem Passieren einer Fokussierungseinrichtung aufgeweitet werden, wobei das Modulieren der Strahlkaustik ein Verändern einer Strahlaufweitung umfasst. Dies weist den Vorteil einer einfachen und kostengünstigen Realisierung auf, wobei durch eine Verringerung der Strahlaufweitung mit zunehmender Tiefe des Lochs eine Schärfentiefe (Rayleigh-Länge) erhöht wird, wodurch die Strahlabschattung am Bohrungseintritt vermindert bzw. vollständig beseitigt werden kann. Bei einem Ausführungsbeispiel kann eine Berechnung eines optimalen Wertes für die Strahlaufweitung bzw. ein adaptives Verfahren verwendet werden, um die Strahlaufweitung nur soweit zu reduzieren, dass der Laserstrahl abschattungsfrei oder weitgehend abschattungsfrei in den Bohrungseintritt erfolgen kann. In entsprechender Weise kann auch bei einem Ausführungsbeispiel, bei dem ein Blendendurchmesser verändert wird, eine Berechnung oder ein adaptives Verfahren verwendet werden, um zu gewährleisten, dass beim Eintritt des Strahls in das Loch keine oder nur geringe Abschattung erfolgt.

Bei einem Ausführungsbeispiel bleibt eine Fokuslänge des Strahls, d.h. der Abstand des Fokuspunkts von dem strahlerzeugenden Bohrwerkzeug bzw. einer Fokussieroptik des strahlerzeugenden Bohrwerkzeugs unverändert oder im Wesentlichen unverändert. Dies bedeutet, dass beim erneuten Setzen des Bohrungsgrunds in eine Fokuslage das Anpassen an die veränderte Tiefe des Bohrungslochs durch eine räumliche Veränderung der Position des Gegenstands erreicht wird, während das Bohrwerkzeug selbst seine räumliche Position nicht zu verändern braucht.

Der Strahl zum Abtragen des Materials kann bei einem Ausführungsbeispiel ein Laserstrahl oder ein Elektronenstrahl sein.

Die Erfindung schafft ferner bei einem Ausführungsbeispiel eine Vorrichtung zum Erzeugen eines Lochs in einem Gegenstand, wobei die Vorrichtung eine Strahlungsquelle zum Erzeugen eines Strahls zum Abtragen von Material und eine Einrichtung zum Setzen eines Bohrungsgrunds in eine Fokuslage des Strahls umfasst. Die Einrichtung zum Setzen eines Bohrungsgrunds in eine Fokuslage ist dabei derart eingerichtet, dass nach Abtragen von Material am Bohrungsgrund ein erneutes Setzen eines Bohrungsgrunds in eine Fokuslage durchgeführt wird. Ferner ist bei der Vorrichtung eine Einrichtung zum Verändern einer Strahlcharakteristik beim erneuten Setzen des Bohrungsgrunds in eine Fokuslage vorgesehen. Die Vorrichtung zum Verändern der Strahlcharakteristik kann hierbei eingerichtet sein, um die Strahlcharakteristik abhängig von einer momentanen Tiefe des Lochs durchzuführen. Die Einrichtung zum Verändern der Strahlcharakteristik ist erfindungsgemäß dazu eingerichtet, um eine Strahlkaustik des Strahls zu modulieren. Ferner kann eine Blendenvorrichtung vorgesehen sein, wobei die Blendenvorrichtung eingerichtet ist, um beim Erneuten Setzen des Bohrungsgrunds in eine Fokuslage einen Blendendurchmesser zu verändern.

Bei einem Ausführungsbeispiel kann eine Vorrichtung eine Fokussiereinrichtung und eine Einrichtung zum Aufweiten des Strahls vor dem Passieren der Fokussiereinrichtung aufweisen, wobei die Einrichtung zum Verändern der Strahlcharakteristik eingerichtet ist, um die Strahlausweitung vor dem Passieren der Fokussiereinrichtung zu verändern. Die Einrichtung zum Verändern der Strahlcharakteristik kann eingerichtet sein, um die Aufweitung des Strahls mit zunehmender Tiefe des Lochs zu reduzieren.

Ferner kann eine Steuerung für die Strahlungsquelle vorgesehen sein, um bei einem erneuten Setzen des Bohrungsgrunds in eine Fokuslage die Energiedichte einer Strahlung, auf der der Strahl basiert, zu erhöhen. Insbesondere bei einem Bohren mit Strahlpulsen wird dabei die Energie eines Strahlpuls bei dem erneuten Setzen des Bohrungsgrunds in eine Fokuslage, dass heißt bei dem Fokuslagennachführen, erhöht.

Die Vorrichtung kann ausgebildet sein, um eine Strahlkaustik derartig zu modulieren, dass beim Eintritt in das Loch keine oder keine wesentliche Abschattung erfolgt.

Die Vorrichtung kann ferner eine Recheneinheit zum Berechnen einer Modulation der Strahlkaustik, abhängig von einer momentanen Tiefe des Lochs, aufweisen.

Die Vorrichtung kann ferner eingerichtet sein, um eine räumliche Veränderung der Position des Gegenstands beim erneuten Setzen des Bohrungsgrunds in eine Fokuslage durchzuführen.

Ferner schafft die vorliegende Erfindung ein Computerprogramm mit einem Programmcode zur Durchführung, wenn das Computerprogramm auf einem Computer abläuft, eines Verfahrens zum Steuern eines Erzeugens eines Lochs mittels eines Strahls zum Abtragen von Material in einem Gegenstand mit dem Schritt eines Steuerns einer Veränderung einer Strahlcharakteristik des Strahls abhängig von einer momentanen Tiefe eine Bohrungsgrunds des Lochs, wenn der Bohrungsgrund erneut in eine Fokuslage des Strahls gesetzt wird, wobei das Verändern der Strahlcharakteristik ein Modulieren einer Strahlkaustik des Strahls umfasst.

Bevorzugte Ausführungsbeispiele der vorliegenden Erfindung werden nachfolgend und unter Bezugnahme auf die beiliegenden Zeichnungen näher erläutert. Es zeigen:
Figuren 1a und 1b eine tiefenabhängige Laserleistung bzw. Energiestromdichte zur detaillierten Erklärung der vorliegenden Erfindung;
Fig. 2 eine skizzenhafte Darstellung einer Strahlkaustik;
Fig. 3 ein Ablaufdiagramm gemäß einem Ausführungsbeispiels;
Figuren 4a und 4b eine schematische Darstellung einer Fokuslagenachführung gemäß einem Ausführungsbeispiel der vorliegenden Erfindung;
Fig. 5 eine schematische Darstellung einer Anordnung zum Erzeugen eines Lochs gemäß einem Ausführungsbeispiels der Erfindung;
Fig. 6 eine schematische Darstellung einer Anordnung zum Erzeugen eines Laserbohrstrahls, bei der unterschiedliche Blenden in einen Strahlgang gesetzt werden;
Fig. 7 eine schematische Darstellung einer veränderbaren Blende gemäß einem Ausführungsbeispiel der vorliegenden Erfindung;
Figuren 8a und 8b schematische Darstellungen zur Erläuterung einer Modulation der Strahlkaustik mit Veränderung eines Blendendurchmessers;
Fig. 9 eine schematische Darstellung eines Ausführungsbeispiels mittels einer Strahlaufweitung; und
Figuren 10a und 10b schematische Darstellungen von Strahlkaustiken bei einer Veränderung einer Strahlaufweitung.

Bevor im Einzelnen bevorzugte Ausführungsbeispiele erläutert werden, soll an dieser Stelle zunächst eine grundlegendere physikalische Betrachtung der vorliegenden Erfindung erfolgen. Wie bereits oben beschrieben, ist es für Bohrungsgeometrien mit einem Bohrschachtverhältnis schwierig, qualitativ hochwertige Bohrungen zu erzeugen. In der Praxis konnte hierbei beobachtet werden, dass bei einem Schachtverhältnis von etwa z/d=15 verstärkt technologische Schwierigkeiten auftreten. Diese Schwierigkeiten äußern sich in Form eines unzulässig hohen Recast-Layers, dass heißt Schmelzablagerungen an den Bohrungswandungen.

Hierbei hat sich gezeigt, dass im Wesentlichen das Schachtverhältnis, und nicht wie zu erwarten wäre allein die Bohrungstiefe und der Bohrungsdurchmesser, maßgeblich für das Auftreten eines erhöhten Recast-Layers verantwortlich zu sein scheint. Dass heißt, ab einem sehr großen Schachtverhältnis treten immer bei geometrisch ähnlichen Bohrungen verstärkt Schmelzablagerungen an den Bohrungswandungen auf.

Dies kann dadurch erklärt werden, dass für die zunehmenden Schmelzablagerungen bei zunehmendem Schachtverhältnis eine zu geringe Energiedichte am Bohrungsgrund vorliegt. Liegt am Bohrungsgrund keine ausreichende Energie zur Verfügung, so ist eine Wechselwirkung zwischen dem Gegenstand, z.B. eines Werkstücks, und dem Laserstrahl nicht mehr ausreichend hoch, um einen effizienten Schmelzaustrieb aus der Bohrung zu gewährleisten. Der Energieverlust, der mit zunehmendem Schachtverhältnis beobachtet werden kann, soll am Beispiel der sogenannten multiplen Reflektion erläutert werden.

Wenn der Laserstrahl in die Bohrung eintritt, wird ein großer Teil der Laserstrahlung an den Bohrungswänden aufgrund der geringen, aber vorhandenen, Strahldivergenz und auch aufgrund der im Regelfall vorhandenen geringen Bohrungskonizität reflektiert. Diese Reflektionen wiederholen sich mehrfach, je tiefer der Laserstrahl in die Bohrung eindringt. Dieser Energietransportmechanismus ist dafür verantwortlich, dass bei Bohrungs-, Schweiß-, oder Scheidanwendungen vergleichsweise hohe Schachtverhältnisse und/oder geringe Wärmeeinflusszonen (Head Effected Zone) wie beim Schweißen (beispielsweise beim Laserstrahltiefschweißen) realisiert werden können.

Die multiplen Reflektionen können allerdings keinen hundertprozentigen Energietransport in die Bohrungstiefe gewährleisten, da bei jeder Reflektion ein geringer Anteil der Laserstrahlung über die sogenannte Fresnel-Absorption in das Werkstück geleitet wird. Dass heißt, je tiefer die Bohrung, desto weniger Energie steht am Bohrungsgrund zur Verfügung. Simulationsrechnungen zeigen, dass nicht nur die Bohrungstiefe sondern vielmehr das Schachtverhältnis als charakteristische geometrische Kenngröße für den Energie maßgeblich ist.

Eine ähnliche Situation ist beispielsweise bei dem Lasertiefschweißen bekannt, siehe beispielsweise Geisel, M.: "Prozesskontrolle und- Steuerung beim Laserstrahlschweißen mit den Methoden der nichtlinearen Dynamik", Bamberg: Meisenbach 2002.

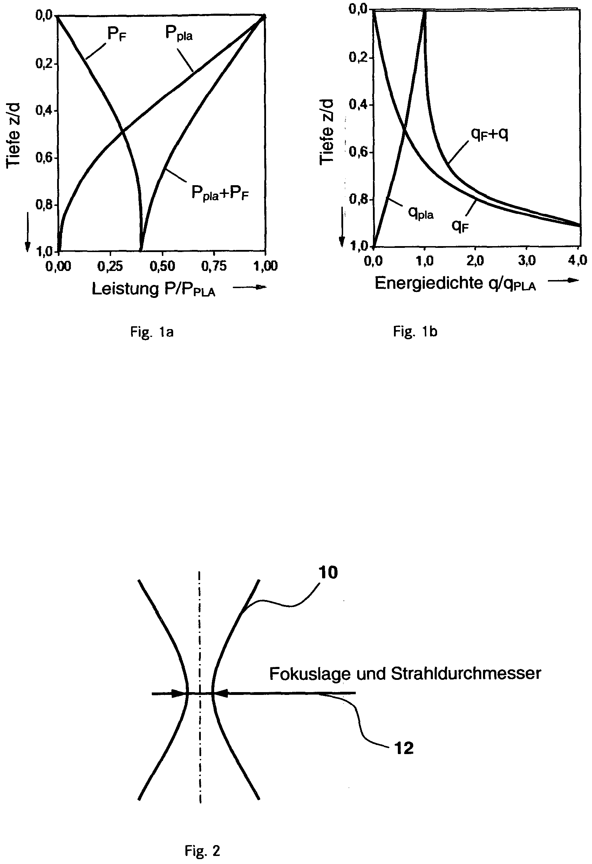

Figuren 1a und 1b zeigen Simulationen für derartige Laserstrahltiefschweißungen, bei denen eine detaillierte Berechnung unterschiedlicher Energieanteile durchgeführt ist.

Fig. la zeigt für eine kegelförmige Schweißnaht einen Leistungsverlust P_{F} durch eine Fresnel-Absorption, wobei der Figur zu entnehmen ist, dass für den Verlauf ausschließlich das Schachtverhältnis c/d maßgeblich ist. Entsprechend zeigt Fig. 1b eine Energiestromdichte, die ebenfalls lediglich von dem Schachtverhältnis c/d abhängig ist.

Da die geometrischen Verhältnisse in der Wechselwirkungszone Werkstück/ Laserstrahl beim Lasertiefschweißen sehr ähnlich zum Strahlbohren sind, können die unten stehenden Erkenntnisse weitgehend auf ein Strahlbohren übertragen werden.

Wie aus den obigen Erläuterungen erkennbar ist, ist somit dem Bohrungsgrund ausreichend Energie zur Verfügung zu stellen, um eine Verminderung der Bohrungsqualität durch die Energieverluste, die beispielhaft durch die Fresnel-Absorption beschrieben werden können, die wiederum maßgeblich vom Schachtverhältnis der Bohrung beeinflusst wird, zu vermeiden.

Gemäß der Erkenntnis der vorliegenden Erfindung wird in Ausführungsbeispielen der vorliegenden Erfindung eine derartige ausreichende Energiebereitstellung am Bohrungsgrund erreicht, indem eine Kombination aus einer Fokuslagennachführung und einer Veränderung der Strahlcharakteristik durchgeführt wird, wobei das Verändern der Strahlcharakteristik ein Modulieren einer Strahlkaustik des Strahls umfasst.

Diese Vorgehensweise weist gegenüber anderen Lösungsmöglichkeiten erhebliche Vorteile auf.

Beispielsweise könnte bei einem anderen Lösungsweg eine Pulsenergie eines Bohrstrahls erhöht werden, wodurch am Bohrungsgrund mehr Energie zur Verfügung stehen würde. Hierbei zeigt sich jedoch, dass die Laserpulsenergie maßgeblich einen Bohrungsdurchmesser bestimmt, so dass eine Pulsenergieerhöhung eine Vergrößerung des Bohrungsdurchmessers zur Folge hätte, was in der Regel nicht akzeptabel ist, beispielsweise da Zeichnungsanforderungen durch Kunden nicht eingehalten werden können.

Ferner könnte auch eine Pulslänge eines Strahlpulses erhöht werden, wodurch am Bohrungsgrund mehr Energie zur Verfügung stehen würde. Hier zeigt sich jedoch in der praktischen Erfahrung, dass eine längere Pulsdauer auch mehr Zeit zum Energietransport in das Werkstück zur Verfügung stellt. Dadurch erhöht sich der Recast-Layer durch Materialaufschmelzung aufgrund der längeren Pulsdauer, was wiederum die Qualität nachteilig beeinflusst.

Ferner könnte auch eine Pulsfrequenz des Strahls erhöht werden, wodurch im zeitlichen Mittel mehr Energie am Bohrungsgrund zur Verfügung stehen würde. Die Pulsfrequenz kann aber aufgrund praktischer Erfahrungen nicht beliebig gesteigert werden, da die maximal zulässige Bohrpulsfrequenz im Wesentlichen durch die Schmelzdynamik bestimmt wird. Mit anderen Worten gesagt, befinden sich bei einer zu starken Erhöhung der Frequenz noch Schmelzpartikel innerhalb der Bohrung, dass heißt ein Bohrpuls interagiert innerhalb der Bohrung mit einem Schmelztropfen, der durch den vorhergehenden Bohrpuls induziert wurde, was zu einem erheblichen Energieverlust führt.

Entgegen den oben genannten Lösungswegen verwendet die vorliegende Erfindung ein Konzept, bei dem eine Fokuslagennachführung in Kombination mit einer Veränderung einer Strahlcharakteristik zur Erhöhung der Energie am Bohrungsgrund durchgeführt wird. Die Veränderung der Strahlcharakteristik ist eine Veränderung bzw. Modulation der geometrischen Form des Laserstrahls, dass heißt eines Strahlkaustikmodulation, wobei diese zusätzlich zu einer Veränderung der Strahlungsenergie erfolgen kann.

Fig. 2 zeigt hierbei eine schematische Darstellung einer Strahlkaustik zur Erklärung der nachfolgend verwendeten Begriffe.

Fig. 2 zeigt die Form einer Strahlkaustik 10, die eine konkave Form aufweist. Die Strahlkaustik 10 weist eine Fokuslage auf, unter der ein Laserstrahlbereich mit der höchsten Energiedichte vorliegt, wodurch sich die Fokuslage bei einem kleinsten Strahldurchmesser der Strahlkaustik (Fokusdurchmesser) ergibt.

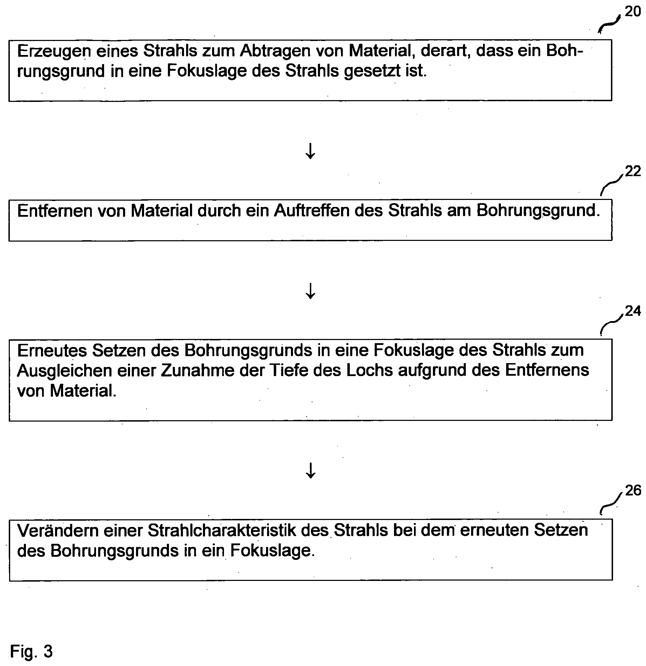

Unter Bezugnahme auf Fig. 3 soll nunmehr ein grundlegender Verfahrensablauf zum Erzeugen eines Lochs gemäß der vorliegenden Erfindung erläutert werden.

In einem ersten Schritt 20 wird ein Strahl zum Abtragen von Material erzeugt, wobei ein Bohrungsgrund in eine Fokuslage des Strahls gesetzt ist. Der Strahl kann beispielsweise ein Elektronenstrahl oder ein Laserstrahl sein. Unter Bohrungsgrund kann bei diesem Schritt sowohl eine bisher unbearbeitete Oberfläche des Werkstücks verstanden werden, an der das Loch erzeugt werden soll, als auch ein Bohrungsgrund eines bereits in den Gegenstand vorgebohrten Lochs.

In einem Schritt 22 wird durch ein Auftreffen des Strahls am Bohrungsgrund Material entfernt. Bei einem Ausführungsbeispiel kann das Entfernen von Material mittels weniger Bohrpulse erfolgen, um auf eine bisher unbearbeitete Oberfläche zunächst eine Sackbohrung zu erzeugen. In einem Schritt 24 wird eine Fokuslagennachführung, d.h. ein erneutes Setzen des Bohrungsgrunds in eine Fokuslage des Strahls zum Ausgleichen einer Zunahme der Tiefe des Lochs aufgrund des Entfernen von Material durchgeführt. Dies kann bei einem Ausführungsbeispiel beispielsweise dadurch erfolgen, dass der Bohrprozess kurzzeitig unterbrochen wird und der Gegenstand bzw. das Werkstück in Richtung der Fokuslage verschoben wird. Dieser Vorgang, dass heißt das Entfernen von Material am Bohrungsgrund in Verbindung mit der Fokuslagennachführung kann mehrere Male wiederholt werden, bis die Bohrung vollständig erstellt ist. Die Bohrung kann bei Ausführungsbeispielen sich lediglich teilweise in den Gegenstand erstrecken oder den Gegenstand vollständig durchdringen. Ferner kann bei anderen Ausführungsbeispielen die oben beschriebene Fokuslagennachführung auch kontinuierlich erfolgen, wobei geeignete Steuerungsprozesse und Computerprogramme zum Steuern vorgesehen sind.

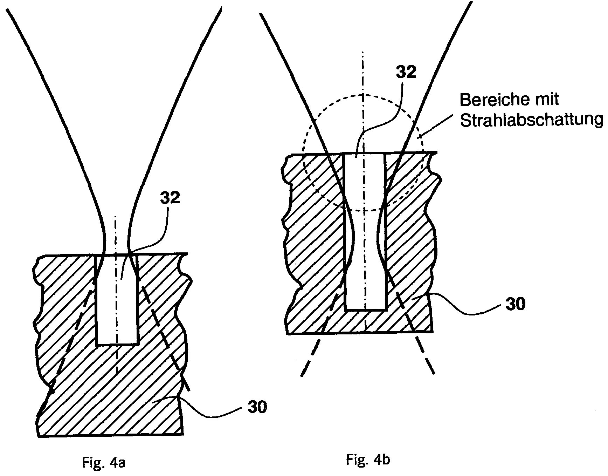

Durch die oben beschriebene Fokuslagennachführung wird die "Werkzeugspitze" des Strahls weiter in die Bohrung reingetragen. Dies ermöglicht insbesondere das Bohren von Löchern mit hohem Schachtverhältnis, d.h. einem Verhältnis von z/d von über 15. Die Anzahl von multiplen Reflektionen wird durch das Verfahren verringert, wodurch mehr Energie am Bohrungsgrund vorhanden ist. Allerdings ist durch die Fokuslagennachführung ohne Anpassung der Strahlcharakteristik die Strahltaille zwar weiter in das Werkstück hinein gewandert, große Teile des Strahls werden jedoch am Bohrungseintritt abgeschattet, weil sich der Laserstrahl aufgrund einer Strahldivergenz oberhalb des Fokus wieder verbreitert, wie es in Fig. 4b im Vergleich zu Fig. 4a gezeigt ist.

Fig. 4a zeigt einen Gegenstand 30, in den bereits ein Loch 32 in der Form eines Sacklochs gebohrt ist. Die Strahlkaustik ist dabei derart eingestellt, dass eine Fokuslage im Bereich des Locheintritts an der Oberfläche des Gegenstands 30 liegt.

Fig. 4b zeigt eine Fokuslagennachführung, bei der eine Veränderung der Strahlcharakteristik nicht durchgeführt wird. Wie in Fig. 4b zu erkennen ist, hat sich der Fokuslagenpunkt in eine Richtung in den Gegenstand hinein verschoben, wodurch sich jedoch an einer Oberfläche des Gegenstands 30 in der Umgebung des Lochs 32 eine Strahlabschattung ergibt. Zum Vermeiden einer derartigen Strahlabschattung wird deshalb bei den in Fig. 3 erläuterten Verfahren ein Verändern einer Strahlcharakteristik des Strahls bei dem erneuten Setzen des Bohrungsgrunds in eine Fokuslage durchgeführt. Wie nachfolgend näher erläutert wird, kann die Durchführung der Veränderung der Strahlcharakteristik bei Ausführungsbeispielen auf unterschiedliche Weise erfolgen. Erfindungsgemäß umfasst die Veränderung der Strahlcharakteristik eine Veränderung der räumlichen Strahlgeometrie, dass heißt der Strahlkaustik, wobei dies jedoch in Ausführungsbeispielen in Kombination mit einer Veränderung der Strahlungsenergie, die durch den Strahl transportiert wird, durchgeführt werden kann. Beispielsweise kann die Energiedichte eines Strahlungspulses, beispielsweise die Energiedichte eines Laserpulses oder eines Elektronenpulses, zusätzlich erhöht werden, um Veränderungen in der Energie des Strahls, die durch die Realisierung der geometrischen Veränderung des Strahls erzeugt werden, beispielsweise eine zusätzliche Ausblendung von Strahlungsanteilen oder Strahlungsmoden, zu kompensieren.

Nachdem nunmehr ein grundlegendes Ausführungsbeispiel eines Verfahrens erläutert wurde, soll nachfolgend eine Vorrichtung zum Realisieren des oben beschriebenen Verfahrens näher erläutert werden.

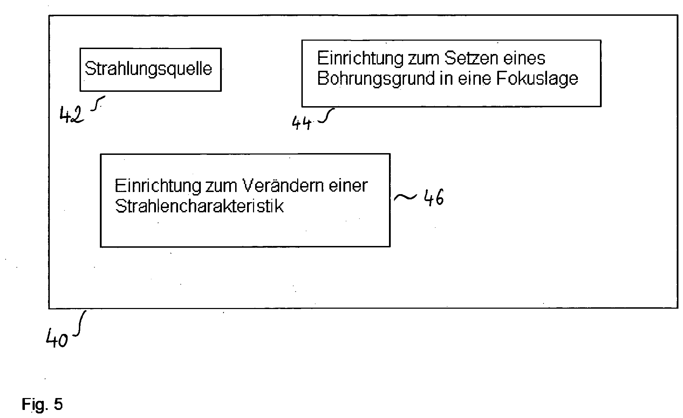

Fig. 5 zeigt ein Blockdiagramm einer Vorrichtung 40 zum Erzeugen eines Lochs in einem Gegenstand. Die Vorrichtung 40 weist eine Strahlungsquelle 42 auf, die eine Strahlung zum Erzeugen eines Strahls zum Abtragen von Material erzeugt. Die Vorrichtung 40 weist ferner eine Einrichtung 44 zum Setzen eines Bohrungsgrunds in eine Fokuslage auf. Die Einrichtung ist dabei derart eingerichtet, dass nach dem Abtragen von Material am Bohrungsgrund ein erneutes Setzen des nunmehr neuen Bohrungsgrunds in eine Fokuslage durchgeführt wird.

Ferner weist die Vorrichtung 40 eine Einrichtung 46 zum Verändern einer Strahlcharakteristik beim erneuten Setzen des Bohrungsgrunds in eine Fokuslage auf. Wie bereits oben beschrieben wurde, ist erfindungsgemäß das Verändern der Strahlcharakteristik ein Verändern bzw. eine Modulation einer Strahlkaustik, wobei eine Blendeneinrichtung oder eine Teleskopeinrichtung zum Aufweiten eines Strahls verwendet werden kann, um die erforderliche Modulation der Strahlkaustik durchzuführen.

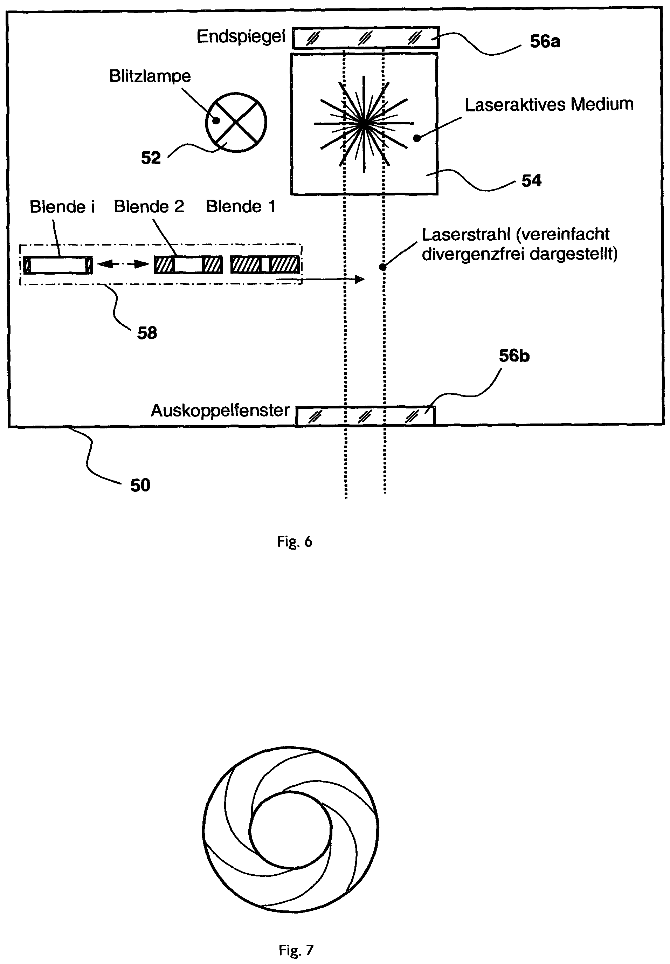

Unter Bezugnahme auf die Figuren 6, 7 und 8a, 8b werden nunmehr Ausführungsbeispiele erläutert, bei denen eine Veränderung der Strahlcharakteristik durch eine Veränderung eines Blendendurchmessers erfolgt.

Fig. 6 zeigt eine Laserstrahlerzeugungsvorrichtung 50 mit einer Blitzlampe 52 und einem laseraktiven Medium 54 zum Erzeugen einer Laserstrahlung. Die Blitzlampe erzeugt eine Anregung des laseraktiven Mediums, das dadurch in einen Modus gebracht werden kann, bei dem Laserstrahlung, d.h. kohärentes Licht, erzeugt wird. Die Vorrichtung 50 weist einen ersten Spiegel 56a und einen zweiten Auskopplungsspiegel 56b auf, durch den ein durch das laseraktive Medium erzeugter Laserstrahl ausgekoppelt werden kann. Die Lasererzeugungsvorrichtung 50 weist ferner eine Blendeneinrichtung 58 auf, die eine Mehrzahl von Blenden 1, 2,...i umfasst, die in den erzeugten Laserstrahl gebracht werden können. Die Blenden der Blendeneinrichtung 58 weisen jeweils einen unterschiedlichen Blendendurchmesser auf, so dass durch Einbringen einer ausgewählten Blende eine vorbestimmte Strahlkaustik erzeugt werden kann. Die Blenden können automatisiert in den Strahlengang eingefahren werden, wobei bei einer Fokuslagennachführung, wie es oben beschrieben wurde, gleichzeitig eine neue Blende in den Strahlengang eingefahren wird. Mit zunehmender Tiefe des Lochs weist eine ausgewählte Blende einen geringeren Durchmesser auf, so dass sich der Rohstrahl des Lasers entsprechend verkleinert. Hierbei ist jedoch zu beachten, dass ein Laserpuls eine geringere Energie am Gegenstand bzw. Werkstück aufweist, weil ein Teil des Rohstrahls durch die Blende absorbiert wird. Um am Gegenstand energetisch konstante Bedingungen gewährleisten zu können, wird bei einem Ausführungsbeispiel eine Laserpulsenergie beim Einfahren einer kleineren Blende entsprechend erhöht. Entsprechende Steuerungen, die computerprogrammierbar sein können, können zum Durchführen einer derartigen energetischen Veränderung der Laserstrahlung vorgesehen sein.

Der oben beschriebene Einsatz einer Blende kann bei Ausführungsbeispielen nicht nur zu einer Verkleinerung des Strahldurchmessers mit zunehmender Tiefe des Lochs führen, sondern auch zu einer Erhöhung der Strahlqualität, da nur Moden niedriger Ordnung angeschwungen werden. Mit anderen Worten gesagt, wird durch den Einsatz einer Blende der Divergenzwinkel ebenfalls verkleinert bzw. die sogenannte Rayleigh-Länge, dass heißt die Schärfentiefe, vergrößert.

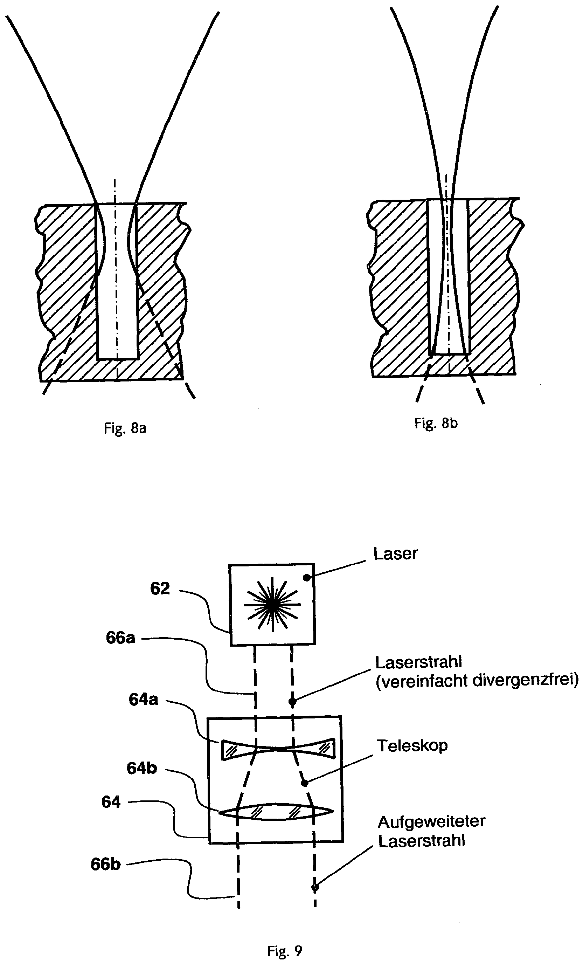

Ein Vergleich der Strahlkaustik im Bereich des Gegenstands mit und ohne Blende ist in Fig. 8a und Fig. 8b dargestellt. Berechnungen der Strahlkaustik und die relevanten Formeln zur analytischen Ableitungen sind dem Fachmann aus der einschlägigen Fachliteratur bekannt, wobei beispielsweise auf die Fachliteratur Hügel, H.: "Strahlwerkzeug Laser", Teubner, Stuttgart, 1992 und Iffländer, R.: "Festkörperlaser zur Materialbearbeitung", Springer, Berlin, Heidelberg, New York, London, Paris, Tokio, Hong Kong, 1990 verwiesen wird. Wie in den Figuren 8a und 8b zu erkennen ist, wird bei einer Veränderung des Blendendurchmessers ein geringerer Konkavitätsgrad (Krümmungsgrad nach außen) der Strahlkaustik und ein verkleinerter minimaler Strahldurchmesser erreicht, wie es in Fig. 8b gezeigt, ist, verglichen mit einer Strahlkaustik ohne eine Blende, wie es in Fig. 8a gezeigt ist. Figuren 8a und 8b zeigen jeweils die Fokuslage auf der Höhe einer Oberfläche des Gegenstands 30, wobei jedoch aus Fig. 8b zu erkennen ist, dass eine Verschiebung der Fokuslage in Richtung in den Gegenstand hinein durchgeführt werden kann, ohne dass der Strahl an einer Öffnung des Lochs 32 abgeschattet wird. Ein weiteres Ausführungsbeispiel zum Verändern eines Blendendurchmessers umfasst eine automatische veränderbare Blende, beispielsweise eine automatisierte Irisblende, wie es in Fig. 7 schematisch dargestellt ist. Eine derartige Vorgehensweise eignet sich insbesondere bei Ausführungsbeispielen, bei denen ein Laserstrahldurchmesser weitgehend kontinuierlich beeinflusst wird.

Entsprechende Steuerungen und Computerprogramme zum Durchführen der kontinuierlichen automatischen Blendendurchmesserveränderung und zur Berechnung eines Blendendurchmessers abhängig von einer Tiefe des Lochs sind in Ausführungsbeispielen ebenfalls vorgesehen.

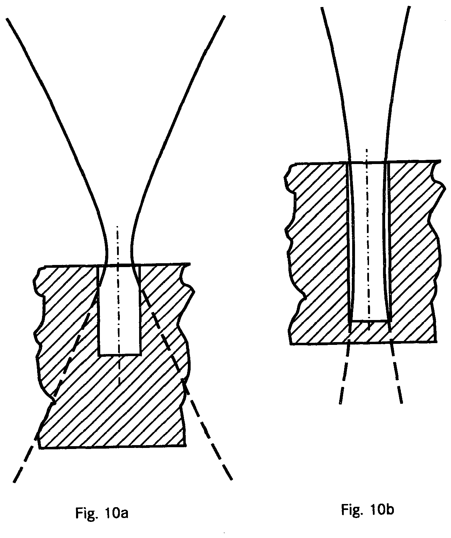

Ein weiteres Ausführungsbeispiel, bei dem eine Strahlkaustik eines Laserstrahls mittels einer Veränderung eines aufgeweiteten Laserstrahls vor einer Fokussiereinrichtung durchgeführt wird, wird nachfolgend unter Bezugnahme auf die Figuren 9 und 10a, 10b näher erläutert. Bei diesen Ausführungsbeispielen wird die Strahlkaustik mit Hilfe eines variablen Teleskops, das in den Strahlengang integriert ist, durchgeführt.

Fig. 9 zeigt eine Laserstrahlerzeugungsvorrichtung 60 mit einem Laser 62 und einer Teleskopanordnung 64 zum Aufweiten des Laserstrahls vor dem Passieren einer Fokussiereinrichtung (Fokussieroptik) wie beispielsweise einer Fokussierlinse. Die Teleskopeinrichtung 64 weist eine erste Linse 64a und eine zweite Linse 64b auf, die bewirken, dass der von dem Laser 62 eintretende Laserrohstrahl 66a aufgeweitet wird und als ein aufgeweiteter Laserstrahl 66b die Teleskopvorrichtung 64 verlässt. Der aufgeweitete Strahl passiert daraufhin die Fokussiereinrichtung, wie es oben bereits erläutert wurde. Unter Verweis auf die bereits oben genannte entsprechende Fachliteratur kann nach den einschlägigen Linsenformeln (ABCD-Gesetz) gezeigt werden, dass sich der Strahldurchmesser nach der Fokussieroptik verkleinert, je größer der Strahl aufgeweitet worden ist. Hierbei nimmt jedoch auch die Schärfentiefe ab, wobei Figuren 10a und 10b die jeweils unterschiedlichen Situationen für verschiedene Teleskopaufweitungen schematisch darstellt. Wie aus Fig. 10b zu entnehmen ist, weist die Strahlkaustik bei geringerer Strahlaufweitung eine geringere Konkavität auf, im Vergleich zu einer Strahlkaustik bei einer großen Strahlaufweitung. Es ist jedoch zu beachten, dass im Unterschied zu dem oben angeführten Ausführungsbeispiels mittels einer Veränderung der Strahlkaustik aufgrund einer Blendenveränderung sich der Strahldurchmesser im Bereich des Gegenstands vergrößert. Daher wird hier mit zunehmender Tiefe des Lochs zwar ein Konkavitätsgrad der Strahlkaustik verringert, der Fokusdurchmesser jedoch erhöht. Bei Ausführungsbeispielen wird daher die Strahlaufweitung nur soweit verringert, bis der Laserstrahl abschattungsfrei bzw. mit nur geringer Abschattung in die bereits vorhandene Bohrung eintreten kann.

Bei einem derartigen Ausführungsbeispiel wird daher der Bohrprozess mit einer möglichst hohen Strahlaufweitung, d.h. einem geringen Fokusdurchmesser begonnen. Bei dem Durchführen der Fokuslagennachführung, wie es oben beschrieben wurde, wird dann simultan die Strahlaufweitung verringert, wodurch sich die Rayleigh-Länge (Schärfentiefe) erhöht und die Strahlabschattung am Bohrungseintritt vermindert bzw. vollständig beseitigt werden kann. Auch bei diesem Ausführungsbeispiel kann eine automatische Berechnung eines optimalen Wertes für die Strahlaufweitung zum Erreichen einer optimalen Strahlkaustik durchgeführt werden. Das Ausführungsbeispiel einer Veränderung der Strahlkaustik mittels einer Veränderung der Strahlaufweitung ermöglicht eine gezielte Modulation der Strahlkaustik mit geringer Komplexität und kostengünstiger Realisierung.

Obwohl in den vorhergehend erläuterten Ausführungsbcispiclcn spezielle Ausgestaltungen beispielsweise in Form eines Laserstrahls erläutert wurden, versteht es sich, dass die vorliegende Erfindung nicht auf derartige Strahlformen begrenzt ist, sondern auch andere Strahlformen, beispielsweise Elektronenstrahlformen umfassen kann.

Es ist ferner darauf hinzuweisen, dass im Sinne der vorliegenden Anmeldung der Begriff Gegenstand weit umfassend sein kann und sowohl ein Werkstück wie beispielsweise einen Metallgegenstand, einen Gegenstand aus Kohlenstoffmaterial, Verbundmaterial oder keramischem Material etc. als auch ein andere Gegenstände umfassen kann.

## Patentansprüche

1. Verfahren zum Erzeugen eines Lochs in einem Gegenstand mit folgenden Schritten:
Erzeugen eines Strahls zum Abtragen von Material, derart, dass ein Bohrungsgrund in eine Fokuslage des Strahls gesetzt ist;
Entfernen von Material durch ein Auftreffen des Strahls am Bohrungsgrund;
Erneutes Setzen des Bohrungsgrunds in eine Fokuslage des Strahls zum Ausgleichen einer Zunahme der Tiefe des Lochs aufgrund des Entfernen von Materials; das Verfahren ist **gekennzeichnet durch** :
Verändern einer Strahlcharakteristik des Strahls bei dem erneuten Setzen des Bohrungsgrunds in eine Fokuslage, wobei das Verändern der Strahlcharakteristik ein Modulieren einer Strahlkaustik des Strahls umfasst.

2. Verfahren nach Anspruch 1, wobei das Verändern der Strahlcharakteristik abhängig von einer momentanen Tiefe des Lochs erfolgt.

3. Verfahren nach Anspruch 1 oder 2, wobei die Strahlkaustik beim erneuten Setzen des Bohrungsgrunds in eine Fokuslage derart moduliert wird, dass mit zunehmender Tiefe des Lochs die Strahlkaustik einen geringeren Konkavitätsgrad aufweist.

4. Verfahren nach einem der Ansprüche 1 bis 3, wobei die Strahlkaustik derart moduliert wird, dass beim erneuten Setzen des Bohrungsgrunds in eine Fokuslage mit zunehmender Tiefe des Lochs ein Fokusdurchmesser geringer wird.

5. Verfahren nach Anspruch 1 bis 4, wobei das Modulieren der Strahlkaustik ein Verändern eines Blendendurchmessers umfasst.

6. Verfahren nach einem der Ansprüche 1 bis 3, wobei die Strahlkaustik derart moduliert wird, dass beim erneuten Setzen des Bohrungsgrunds in eine Fokuslage mit zunehmender Tiefe des Lochs ein Fokusdurchmesser größer wird.

7. Vorrichtung zum Erzeugen eines Lochs in einem Gegenstand mit folgenden Merkmalen:
einer Strahlungsquelle zum Erzeugen eines Strahls zum Abtragen von Material;
einer Einrichtung zum Setzen eines Bohrungsgrunds in eine Fokuslage des Strahls, wobei die Einrichtung zum Setzen eines Bohrungsgrunds in eine Fokuslage ausgebildet ist, um nach Abtragen von Material am Bohrungsgrund ein erneutes Setzen eines Bohrungsgrunds in eine Fokuslage durchzuführen; die Vorrichtung ist **gekennzeichnet durch** :
einer Einrichtung zum Verändern einer Strahlcharakteristik beim erneuten Setzen des Bohrungsgrunds in eine Fokuslage, wobei die Einrichtung zum Verändern der Strahlcharakteristik eingerichtet ist, um eine Strahlkaustik des Strahls zu modulieren.

8. Vorrichtung nach Anspruch 7, wobei die Einrichtung zum Verändern der Strahlcharakteristik eingerichtet ist, um das Verändern der Strahlcharakteristik abhängig von einer momentanen Tiefe des Lochs durchzuführen.

9. Vorrichtung nach Anspruch 7, wobei die Einrichtung zum Verändern der Strahlcharakteristik eine Blendenvorrichtung aufweist, wobei die Blendenvorrichtung eingerichtet ist, um bei dem erneuten Setzen des Bohrungsgrunds in eine Fokuslage einen Blendendurchmesser zu verändern.

10. Vorrichtung nach Anspruch 7, wobei die Vorrichtung eine Fokussiereinrichtung und eine Einrichtung zum Aufweiten des Strahls vor dem Passieren der Fokussiereinrichtung aufweist, wobei die Einrichtung zum Verändern einer Strahlcharakteristik ausgebildet ist, um die Strahlaufweitung vor dem Passieren der Fokussiereinrichtung zu verändern.

11. Vorrichtung nach Anspruch 10, wobei die Einrichtung zum Verändern der Strahlcharakteristik ausgebildet ist, um eine Aufweitung des Strahls mit zunehmender Tiefe des Lochs zu reduzieren.

12. Vorrichtung nach einem der Ansprüche 7 bis 11, wobei Vorrichtung eine Steuerung für die Strahlungsquelle aufweist, um beim erneuten Setzen des Bohrungsgrunds in eine Fokuslage die Energiedichte einer Strahlung, auf der der Strahl basiert, zu erhöhen.

13. Computerprogramm mit einem Programmcode zur Durchführung, wenn das Computerprogramm auf einem Computer abläuft, eines Verfahrens zum Steuern eines Erzeugens eines Lochs mittels eines Strahls zum Abtragen von Material in einem Gegenstand mit folgendem Schritt:
Steuern einer Veränderung einer Strahlcharakteristik des Strahls abhängig von einer momentanen Tiefe eines Bohrungsgrunds des Lochs, wobei das Verändern der Strahlcharakteristik ein Modulieren einer Strahlkaustik des Strahls umfasst, wenn der Bohrungsgrund erneut in eine Fokuslage des Strahls gesetzt wird.

## Claims

1. Method for producing a hole in an object, comprising the following steps:
generating a beam for removing material such that a bore base is placed into a focal position of the beam;
removing material by impingement of the beam on the bore base;
re-placing the bore base into a focal position of the beam to compensate for an increase in the depth of the hole due to the removal of material; the method is **characterized by**:
changing a beam characteristic of the beam when the bore base is re-placed into a focal position, the changing of the beam characteristic comprising modulating a beam caustic of the beam.

2. Method according to claim 1, wherein the beam characteristic is changed depending on a current depth of the hole.

3. Method according to either claim 1 or claim 2, wherein when the bore base is re-placed into a focal position, the beam caustic is modulated in such a way that, with increasing depth of the hole, the beam accumulation has a lower degree of concavity.

4. Method according to any of claims 1 to 3, wherein the beam caustic is modulated in such a way that when the bore base is re-placed into a focal position, a focus diameter becomes smaller with increasing depth of the hole.

5. Method according to claims 1 to 4, wherein the modulation of the beam caustic comprises changing a diaphragm diameter.

6. Method according to any of claims 1 to 3, wherein the beam caustic is modulated in such a way that when the bore base is re-placed into a focal position, a focus diameter becomes larger with increasing depth of the hole.

7. Apparatus for producing a hole in an object, having the following features:
a radiation source for generating a beam for removing material;
a device for placing a bore base into a focal position of the beam, the device for placing a bore base into a focal position being designed to re-place a bore base into a focal position after removal of material at the bore base; the apparatus is **characterized by:**
a device for changing a beam characteristic when the bore base is re-placed into a focal position, the device for changing the beam characteristic being configured to modulate a beam caustic of the beam.

8. Apparatus according to claim 7, wherein the device for changing the beam characteristic is configured to change the beam characteristic depending on a current depth of the hole.

9. Apparatus according to claim 7, wherein the device for changing the beam characteristic has a diaphragm means, wherein the diaphragm means is configured to change a diaphragm diameter when the bore base is re-placed into a focal position.

10. Apparatus according to claim 7, wherein the apparatus comprises a focusing device and a device for expanding the beam before passing the focusing device, wherein the device for changing the beam characteristic is designed to change the beam expansion before passing the focusing device.

11. Apparatus according to claim 10, wherein the device for changing the beam characteristic is designed to reduce an expansion of the beam with increasing depth of the hole.

12. Apparatus according to any of claims 7 to 11, wherein the apparatus has a controller for the radiation source in order to increase the energy density of a radiation on which the beam is based when the bore base is re-placed into a focal position.

13. Computer program having a program code for carrying out, when the computer program runs on a computer, a method for controlling production of a hole by means of a beam for removing material in an object, with the following step:
controlling a change in a beam characteristic of the beam depending on a current depth of a bore base of the hole, wherein the changing of the beam characteristic comprises modulating a beam caustic of the beam when the bore base is re-placed into a focal position of the beam.

## Revendications

1. Procédé permettant de produire un trou dans un objet, comportant les étapes suivantes :
production d'un faisceau pour l'enlèvement de matériau de telle sorte qu'un fond d'alésage est positionné dans une position de focalisation du faisceau ;
enlèvement de matériau par impact du faisceau sur le fond d'alésage ;
repositionnement du fond d'alésage dans une position de focalisation du faisceau pour la compensation d'une augmentation de la profondeur du trou due à l'enlèvement de matériau ; le procédé est **caractérisé par** :
la modification d'une caractéristique de faisceau du faisceau lors du repositionnement du fond d'alésage dans une position de focalisation, la modification de la caractéristique de faisceau comprenant une modulation d'une caustique de faisceau du faisceau.

2. Procédé selon la revendication 1, dans lequel la modification de la caractéristique de faisceau est effectuée en fonction d'une profondeur actuelle du trou.

3. Procédé selon la revendication 1 ou 2, dans lequel la caustique de faisceau est modulée lors du repositionnement du fond d'alésage dans une position de focalisation de telle sorte que la caustique de faisceau présente un degré de concavité plus faible lorsque la profondeur du trou augmente.

4. Procédé selon l'une des revendications 1 à 3, dans lequel la caustique de faisceau est modulée de telle sorte que, lorsque le fond d'alésage est repositionné dans une position de focalisation, un diamètre de focalisation diminue lorsque la profondeur du trou augmente.

5. Procédé selon les revendications 1 à 4, dans lequel la modulation de la caustique de faisceau comprend une modification d'un diamètre de diaphragme.

6. Procédé selon l'une des revendications 1 à 3, dans lequel la caustique de faisceau est modulée de telle sorte que, lorsque le fond d'alésage est repositionné dans une position de focalisation, un diamètre de focalisation augmente lorsque la profondeur du trou augmente.

7. Dispositif permettant de produire un trou dans un objet, comportant les caractéristiques suivantes :
une source de rayonnement permettant de produire un faisceau pour l'enlèvement de matériau ;
un appareil permettant de positionner un fond d'alésage dans une position de focalisation du faisceau, l'appareil permettant de positionner un fond d'alésage dans une position de focalisation étant conçu pour réaliser, après l'enlèvement de matériau au niveau du fond d'alésage, un repositionnement d'un fond d'alésage dans une position de focalisation, le procédé étant **caractérisé par** :
un appareil permettant de modifier une caractéristique de faisceau lors du repositionnement du fond d'alésage dans une position de focalisation, l'appareil permettant de modifier la caractéristique de faisceau étant configuré pour moduler une caustique de faisceau du faisceau.

8. Dispositif selon la revendication 7, dans lequel l'appareil permettant de modifier la caractéristique de faisceau est configuré pour réaliser la modification de la caractéristique de faisceau en fonction d'une profondeur actuelle du trou.

9. Dispositif selon la revendication 7, dans lequel l'appareil permettant de modifier la caractéristique de faisceau présente un dispositif de diaphragme, le dispositif de diaphragme étant conçu pour modifier un diamètre de diaphragme lors du repositionnement du fond d'alésage dans une position de focalisation.

10. Dispositif selon la revendication 7, dans lequel le dispositif présente un appareil de focalisation et un appareil permettant d'élargir le faisceau avant le passage de l'appareil de focalisation, l'appareil permettant de modifier une caractéristique de faisceau étant configuré pour modifier l'élargissement de faisceau avant le passage de l'appareil de focalisation.

11. Dispositif selon la revendication 10, dans lequel l'appareil permettant de modifier la caractéristique de faisceau est configuré pour réduire un élargissement du faisceau lorsque la profondeur du trou augmente.

12. Dispositif selon l'une des revendications 7 à 11, dans lequel dispositif présente une commande pour la source de rayonnement afin d'augmenter la densité d'énergie d'un rayonnement sur lequel est basé le faisceau lorsque le fond d'alésage est repositionné dans une position de focalisation.

13. Programme d'ordinateur comportant un code de programme permettant de réaliser, lorsque le programme d'ordinateur est exécuté sur un ordinateur, un procédé permettant de commander la production d'un trou au moyen d'un faisceau permettant l'enlèvement de matériau dans un objet, comportant l'étape suivante :
commande d'une modification d'une caractéristique de faisceau du faisceau en fonction d'une profondeur actuelle d'un fond d'alésage du trou, la modification de la caractéristique de faisceau comprenant une modulation d'une caustique de faisceau du faisceau lorsque le fond d'alésage est repositionné dans une position de focalisation du faisceau.
